# EUROPÄISCHE PATENTSCHRIFT

(11) **EP 1 987 174 B1**
(45) Veröffentlichungstag und Bekanntmachung des Hinweises auf die Patenterteilung: **21.04.2010**
(21) Anmeldenummer: 07711581.4
(22) Anmeldetag: 19.02.2007
(51) Int. Cl.: C25B 1/06, C25B 13/04, C25B 13/08

(54) **ANORDNUNG UND VERFAHREN ZUM SPALTEN VON WASSER**
SYSTEM AND METHOD FOR SPLITTING WATER
SYSTÈME ET PROCÉDÉ DE DÉCOMPOSITION D'EAU

(30) Priorität: 20.02.2006 DE 102006007773
(43) Veröffentlichungstag der Anmeldung: 05.11.2008
(73) Patentinhaber: Hermsdorfer Institut für Technische Keramik e.V., 07629 Hermsdorf (DE); Kothe, Walter, 94351 Feldkirchen (DE)
(72) Erfinder: KOTHE, Walter, 94351 Feldkirchen (DE); ADAM, Harald, 07616 Serba (DE); GRÜTZMANN, Dieter, 07646 Stadtroda (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2007/001425
(87) Internationale Veröffentlichungsnummer: WO 2007/096120

(56) Entgegenhaltungen:
- WO-A-01/27037
- US-A1- 2004 195 089
- US-B1- 6 248 221

## Beschreibung

Die vorliegende Erfindung betrifft eine Anordnung zum Spalten von Wasser gemäß Anspruch 1 sowie ein Verfahren zum Spalten von Wasser gemäß Anspruch 12.

Im Zuge der immer knapper werdenden Erdöl- und Gasressourcen sowie der Klimaproblematik der Verbrennung von fossilen Brennstoffen durch Eintrag von gigantischen CO₂-Mengen durch Industrie, private Haushalte und Verbrennungsmotoren ist es anzustreben, fossile Brennstoffe durch umweltfreundlichere energiehaltige Systeme zu ersetzen.

Hierfür bietet sich grundsätzlich die Verbrennung von Wasserstoff mit Sauerstoff oder Luft an, welche im Wesentlichen nur Wasserdampf als Abgas liefert.

Zwar ist die Verwendung von Wasserstoff in Verbrennungsmotoren aus sicherheitstechnischen Gründen aufgrund des explosiven Charakters des Wasserstoffs in Gegenwart von Sauerstoff nicht ganz unproblematisch, jedoch sind derzeit die meisten technischen Probleme zur sicheren Wasserstoffbetankung von Fahrzeugen gelöst.

So betreibt beispielsweise der Flughafen München eine Wasserstofftankstelle, mit der wasserstoffbetriebene Busse betankt werden und innerhalb des Flughafenbereichs eingesetzt werden.

Da dies unter den hohen Sicherheitsbedingungen eines Flughafens möglich ist, darf man annehmen, dass die grundsätzlichen Sicherheitsprobleme beim Betanken von Fahrzeugen mit Wasserstoff in der Praxis gelöst sind.

Nicht gelöst ist jedoch bislang die energiesparende und umweltschonende Erzeugung von Wasserstoff.

Kommerziell wird Wasserstoff seit über 100 Jahren in vielen Bereichen eingesetzt. Er wird größtenteils von der chemischen Industrie als Synthesegas eingesetzt und in der Halbleiter-, Glas- und Metallindustrie sowie als Raketentreibstoff verwendet. Derzeit werden weltweit circa 500 bis 600 Milliarden Kubikmeter H₂ benötigt.

Wasserstoff ist ein farb-, geruchs- und geschmacksneutrales leichtes Gas (etwa 14,4 mal leichter als Luft mit einer Dichte von 0,8988 kg/m³). Es hat einen spezifischen Heizwert von 10,8 MJ/m³. Seine Schmelztemperatur liegt bei 14,15 K und seine Siedetemperatur bei 20,35 K.

Wasserstoff ist ein sogenannter Sekundärenergieträger und ist als reiner Stoff in molekularer Form nicht verfügbar, sondern er kommt nur in chemischen Verbindungen vor. Der größte Wasserstoffspeicher der Erde ist Wasser.

Um die Energie des Wasserstoffs zu nutzen, muss er somit zunächst mit hohem Energieaufwand aus seinen Verbindungen herausgelöst werden. Derzeit wird der Wasserstoff zum größten Teil noch aus fossilen Energieträgern hergestellt. Hauptsächlich findet die Herstellung durch sogenannte Dampfreformierung von Erdgas statt. Früher wurde durch Vergasen von Kohle ein sogenanntes "Stadtgas" hergestellt, welches zu 60 % aus Wasserstoff bestand. Des Weiteren entsteht Wasserstoff als Nebenprodukt bei chemischen Prozessen wie beispielsweise der Herstellung von Chlor, der Auflösung von unedlen Metallen in Säuren und in der Mineralölindustrie bei der Raffinierung.

Da die konventionellen Methoden zur Herstellung von Wasserstoff jedoch mit umweltschädlichen Emissionen verbunden sind, wächst die Bedeutung der Wasserstoffherstellung mittels regenerativer Energiequellen. Eine solche Möglichkeit liegt in der Erzeugung von Wasserstoff durch Vergasung von Biomasse.

Durch eine Verbesserung dieses Verfahrens lassen sich zumindest theoretisch alle kohlenwasserstoffhaltigen Stoffe vergasen.

Nachteilig bei dieser Technologie ist es jedoch das neben Wasserstoff auch größere Mengen CO₂ entstehen, welches wiederum als Treibhausgas unerwünscht ist.

Darüber hinaus sind biologische Prozesse stark temperaturabhängig, so dass schwankende Ausbeuten erreicht werden. Ein Konzept aus in Europa wachsender Biomasse Wasserstoffmengen in vernünftigen Mengen herstellen zu können, ist beispielsweise beschrieben unter der URL www.bio-wasserstoff.de/h2/.

Eine weitere Möglichkeit, Wasserstoff herzustellen ist die Elektrolyse von Wasser, welches vorzugsweise stark ionenhaltig ist, bei der unter Verwendung von elektrischem Strom die Wassermoleküle in Wasserstoff und Sauerstoff aufgespalten werden. Hierbei führt die kathodische Reduktion von Hydroniumionen zur Entstehung von molekularem H₂, während anodisch eine Oxidation von Sauerstoff in Hydroxidionen zur Entstehung von molekularem O₂ führt. Beide Gase werden dann getrennt aufgefangen, in Vorratsbehältern gesammelt, gereinigt und schließlich mittels Kompressoren in Drucklagern, z. B. Hochdrucktanks oder-flaschen gelagert.

Da die großtechnische Herstellung von Wasserstoff mittels Elektrolyse aus verschiedenen Gründen, unter anderem der sogenannten Überspannungsphänomene relativ energieaufwendig ist, beschränkt sich der bisherige Stand der Technik im Wesentlichen auf die Herstellung kleinerer Mengen von Wasserstoff durch Wasserelektrolyse. So offenbart beispielsweise die DE 2 147 312 ein Mikro-Autogen-Schweißgerät. In der DE 2 147 312 wird eine Vorrichtung zur Erzeugung einer Schweißflamme aus Knallgas durch Elektrolyse von Wasser unter Verwendung von Lauge als Elektrolyt in einem mit Elektroden ausgestatteten Reaktor mit einem Füll- und Entnahmestutzen beschrieben, wobei die Vorrichtung weiterhin einen Transformator sowie einen Gleichrichter für die Stromversorgung der Elektroden und ein von Entnahmestutzen zu einem Brenner führende Gasentnahmeleitung aufweist, in die gegebenenfalls Rückschlagsperren sowie Filter und/oder Sicherheitsvorlagen eingebaut sind, wobei die Elektroden die . Form von Platten oder Lamellen besitzen. ,

Mit einer derartigen Elektrolysevorrichtung lassen sich jedoch nur kleine Mengen an Wasserstoffgas zur Verfügung stellen.

Darüber hinaus beschreibt die DE 1 817 719 keramische Diaphragmen für sogenannte elektrokinetische Geräte, bei denen Flüssigkeiten in poröse Träger, insbesondere Keramiken gepumpt werden und hierbei eine Ladungstrennung entsteht, so dass eine elektrische Spannung im Sinne eines elektrokinetischen Generators abgegriffen werden kann.

US 2004/195089 A1 offenbart eine Anordnung zur Elektrolyse von Wasser, wobei sich eine Kathode 03 einer Anode 04 gegenüber befindet und zwischen den Elektroden eine teilweise poröse Trennwand 05 aus einem Elektretmaterial befindet.

Die Verwendung von gepulster Gleichspannung ist aus der WO 01/27037 A bekannt, welche die Elektrolyse von Wasser in einer Elektrolysezelle mit möglichst eng voneinander beabstandeten Anoden und Kathoden offenbart, wobei eine ferroelekrische Substanz zwischen diesen Anoden und Kathoden eingebracht sein kann.

Ausgehend von dem eingangs erwähnten Stand der Technik ist es Aufgabe der vorliegenden Erfindung, eine elektrochemische Anordnung sowie ein Verfahren zur Verfügung zu stellen, mit denen Wasserstoff aus Wasser kostengünstig und möglichst ohne auf Erdölressourcen zurückgreifen zu müssen durch Spaltung von Wasser in ausreichender Menge zur Verfügung zu stellen.

Vorrichtungstechnisch wird diese Aufgabe durch die Merkmale des Anspruchs 1 gelöst.

Verfahrenstechnisch wird die Aufgabe gemäß den Merkmalen des Anspruchs 12 gelöst.

Die Unteransprüche stellen bevorzugte Ausführungsformen der vorliegenden Erfindung dar.

Mit der vorliegenden Erfindung wird die Steigerung des Wirkungsgrades der Wasserspaltung im Vergleich zu klassischen Elektrolyseverfahren mittels Gleichstrom und Metallelektroden angestrebt. Mit klassischen Methoden wird lediglich ein Wirkungsgrad von maximal 20 % erreicht. Ziel der vorliegenden Erfindung ist es jedoch eine Wirkungsgrad von über 90 % zu erreichen und schlussendlich soll mit der vorliegenden Erfindung ein neues Reaktormodul hergestellt werden, welches einen Generator von 1 Kilowatt betreiben kann. Die gesamte Anordnung soll wesentlich verkleinert und handlicher werden. Das Verfahren gemäß der vorliegenden Erfindung kann für weitere Anwendungen modifiziert werden, insbesondere zur Herstellung von Treibstoffen und Synthesegasen.

Der mit der vorliegenden Erfindung hergestellte Wasserstoff kann in Verbrennungssystemen verwendet werden, wo bisher fossile Energieträger verwendet wurden. Er kann natürlich auch verwendet werden, um elektrochemische H₂/O₂ Brennstoffzellen zur Stromerzeugung zu betreiben.

Insbesondere soll mit der vorliegenden Erfindung ein sogenannter Gradientenwerkstoff anstelle einer einfachen Metallelektrode zur Verfügung gestellt werden und die elektrische Anregung des elektrokatalytischen Verfahrens der vorliegenden Erfindung soll optimiert werden.

Das erfindungsgemäße Verfahren (Gradierung der Werkstoffe, Eigenschaft der Schaltung) basiert - ohne hierauf beschränkt zu sein - auf folgenden theoretischen Grundlagen:
Grundlage I:
   Eine Gradierung (das schichtweise Ansteigen) der Dielektrizitätskonstanten kann die Nutzung elektrischer Dispersionseffekte erlauben. Bei einer in Passagerichtung ansteigenden Dielektrizitätskonstanten und einer abnehmenden Dicke der Membranlagen kann der Anregungsprozess sich sogar schichtweise selber steuern, wenn die Anregungsfrequenz (in einem geeigneten Spektrum bleibend) ansteigt.
Grundlage II:
   Bei Gradierung der Porosität (Anzahl und Größe der Poren) kann das Wasser in den Membranschichten eine (von kapillaren Wirkungen limitierte) zunehmende Feinverteilung erfahren. Möglichst große, innere Membranoberflächen führen zu entsprechend hohen Dissoziationsraten.
Grundlage III:
   Entsprechende Schaltungen ohne den Anfall von Blindleistung wurden bereits vom Erfinder entwickelt (im Rahmen der vorliegenden Erfindung beschrieben) und können dabei ebenfalls zum Einsatz kommen.
Grundlage IV:
   Es handelt sich bei dem erfindungsgemäßen Verfähren nicht um eine Elektrolyse im herkömmlichen Sinne, sondern um eine "Hyperpolarisierung" von molekularen Wasserdipolen mittels elektrischer Felder. Elektronenströme (Redoxvorgänge an Elektroden) fließen dabei kaum. Die Ladungen auf den verwendeten Keramiken sind überwiegend ortsfest. Geht die Passage des Wassers durch Schichten mit einer Permitivität > 81 (also derjenigen von H₂O) zerfällt das Wasser (Hyperpolarisierung). Stabile Wasserstoffbrücken bilden ein Netz, teildissoziiertes Wasser bildet Gas in den Poren als Reaktionsräume. Aufgrund der zumindest teilweise nanopolaren riesigen inneren Oberfläche kann die Verteilung gelöster Wirkstoffe - etwa für Arzneimittelzwecke - verbessert werden.

Die vorliegende Anordnung wurde im Labormaßstab getestet. Die Wasserspaltung mittels Elektroden und dazwischen liegenden Keramikschichten und der elektrischen Anregung, wie hier weiter unten detailliert beschrieben wird, funktioniert und die Erfindung ist somit ausführbar.

Die Herstellung und Anwendung gradierter keramischer Membranen wie in der vorliegenden Erfindung verwendet, in Reaktoren zur Erzeugung von Wasserstoff aus Wasser, stellen eine Schlüsseltechnologie dar. Diese erlaubt mit hoher Wahrscheinlichkeit die Entwicklung neuartiger chemischer Reaktoren für den Einsatzbereich beispielsweise in der Komplexchemie bis hin zum Bau von Antriebsquellen für Motoren und Generatoren auf der Basis von Wasser, was mittels eines Zweitaktmotors überprüft wurde.

Aufgrund der Temperaturen des Sommers 2003, die schon damals einen rasanten globalen Klimawandel andeuteten, kommt der Erfindung besondere Bedeutung zu, da die neuartige Membrantechnologie die Möglichkeit hiermit Wasserstoff ökologisch verträglich und wirtschaftlich sinnvoll herstellen zu können, könnte die Lösung dringender ökologischer und ökonomischer Probleme erbringen.

Die Wasserstofffraktion aus einem H₂/O₂-Gemisch wobei der Wasserstoff. beispielsweise passiv durch eine weitere Membran abtrennbar ist, kann dann mit anderen Treibstoffen für Boden-, Luft- und Raumfahrzeuge in ernsthafte Konkurrenz treten.

Im Rahmen der vorliegenden Erfindung wurden optimierte Verfahrenstechniken zur Erzeugung von Wasserstoff zur Verfügung gestellt. Es wurden bisher schon umfangreiche und intensive Anstrengungen unternommen, um Energie- und Antriebstechnologien auf der Basis von Wasserstoff als Energieträger zu entwickeln.

Einige schon fast ausgereifte Technologien, wie z. B. die Brennstoffzelle oder das Wasserstofftriebwerk haben derzeit leider nur sehr geringe Chancen, sich auf breiter Front durchzusetzen, wobei die Produktion von Wasserstoff bislang noch zu teuer war. Dies soll sich jedoch aufgrund der vorliegenden Erfindung ändern:

Ein neuartiger Reaktortyp auf keramischer Basis, jedoch, welcher die Effizienz der Gewinnung von Wasserstoff erheblich verbessert, kann dazu beitragen, diese Diskrepanz zu überwinden. Ökologisch zwingende Technologien würden ökonomische Hürden höchstwahrscheinlich schneller überwinden und bald im großen Stil eingesetzt werden.

Wasserstoff wird darüber hinaus als chemischer Grundstoff bereits, wie eingangs erläutert, in großen Mengen nachgefragt.

Die vorliegende Erfindung stellt ein Konzept für den neuen Reaktortyp zur Verfügung. Die bisherigen Experimente sind viel versprechend. Der Reaktor eignet sich nach Vorversuchen nicht nur zur elektrochemischen Spaltung von Wasser, sondern kann auch für andere chemische und physikalische Zielsetzungen modifiziert werden, wodurch er eine echte Basis- bzw. Schlüsseltechnologie darstellt.

Kern der Erfindung ist es, Membranen und Membranstapel jedweder Dimensionierung und Gestalt, die ferroelektrisch und zugleich porös sind, in den erfindungsgemäßen Anordnungen einzusetzen. Derartige Membranen und Membranstapel der vorbezeichneten Art weisen folgende Eigenschaften auf:
1. Membranen und/oder Membranstapel aus organischen und/oder anorganischen Werkstoffen sind sowohl ferroelektrisch als auch porös.

Sie weisen ebenfalls eine Gradierung der Dielelektrizitätskonstanten der Membranlagen zur Nutzung elektrischer Dispersionseffekte auf. Zusätzlich steigt die in Passagerichtung eines Mediums betrachtete Dielelektrizitätskonstante bei abnehmender Schichtdicke der einzelnen porösen Membranlagen (Gradierung der Schichtendicke an).

Die Gradierung der Porosität (also die Anzahl und Größe der Poren) in den Membranschichten in Passagerichtung des Reaktionsmediums bewirkt eine zunehmende Feinverteilung und die Entstehung einer möglichst großen inneren Reaktionsoberftäche.

Die Herstellung und der Einsatz gradierter Membranen mit ferroelektrischen und gleichzeitig porösen Eigenschaften erlaubt die Entwicklung neuartiger chemischer und/oder physikalischer Reaktoren sowie Filter.

Hauptanwendungsbeispiele für den Einsatz gradierter Membranen mit ferroelektrischen und gleichzeitig porösen Eigenschaften sind Gasgeneratoren.

Mit der vorliegenden Erfindung kann der Wirkungsgrad konventioneller H₂-Gasgeneratoren gesteigert werden durch die sogenannten LORENTZ-Felder in den Poren ferroelektrischer Membranen gemäß der vorliegenden Erfindung, welche die Wärmebewegung der Wasserbewegung einschränken und die Moleküle vorpolarisieren bzw. die OH-Streckschwingung bis hin zur Aufspaltung der OH-Bindung verstärken. Die Membranen gemäß der vorliegenden Erfindung sind einsetzbar bei der Spaltung von Wasser zu technischen Gasen.

Weitere Vorteile und Merkmale der vorliegenden Erfindung ergeben sich aufgrund der Beschreibung von Ausführungsbeispielen sowie anhand der Zeichnungen.

Es zeigt:

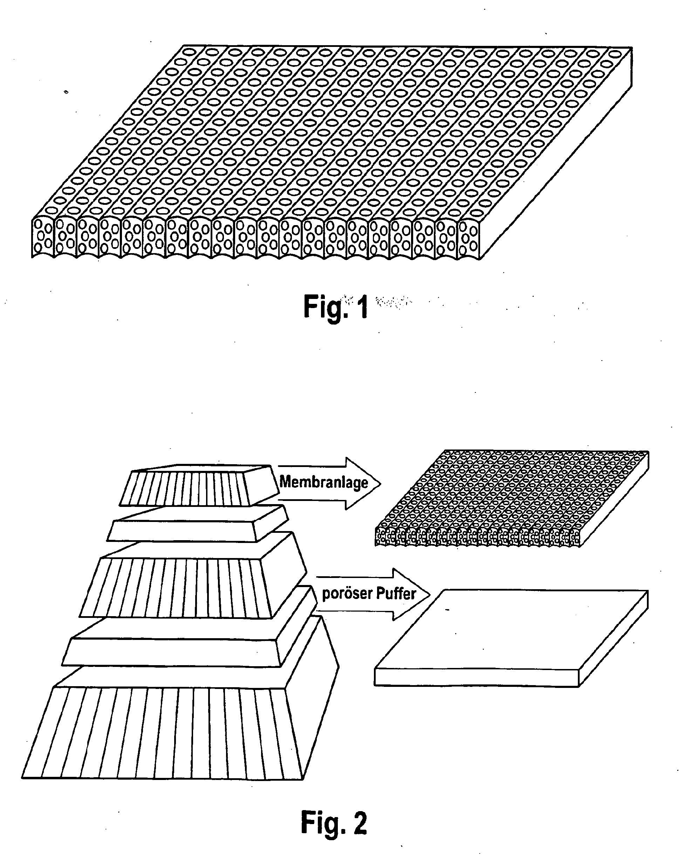

- Fig. 1: den Grundaufbau einer Membran mit ferroelektrischen und porösen Eigenschaften;
- Fig. 2: den Grundaufbau eines Komposites gestapelter ferroelektrischer Membranen, hier in der Form eines Oktaederstumpfes, bei abnehmender Schichtdicke zu dessen Spitze hin geordnet nach ansteigender Dielektrizitätskonstante und Porosität;
- Fig. 3: ein Schema der elektrischen Felder in einer Nanopore;
- Fig. 4: eine Filterschaltung zum Erzeugen von Resonanzfrequenzen;
- Fig. 5: gesinterte Keramikplatten mit Gitterelektroden aus Molybdän, Aluminium und Gold;
- Fig. 6: eine rasterelektronenmikroskopische Aufnahme der erfindungsgemäß verwendeten porösen ferroelektrischen keramischen Oberfläche;
- Fig. 7: ein Röntgenbeugungsdiagramm eines erfindungsgemäß verwendeten Bariumtitanoxids;
- Fig. 8: eine Porengrößenverteilungskurve der erfindungsgemäß verwendeten porösen ferroelektrischen Keramik;
- Fig. 9: eine toroidförmige Ausführungsform der erfindungsgemäß verwendbaren porösen ferroelektrischen Keramik-Schicht.

Beispielhafte Herstellung poröser ferroelektrischer Keramikplatten für den Einsatz in den erfindungsgemäßen Anordnungen, welche als Wasserspaltungsreaktor eingesetzt werden können.

### 1. Pulveraufbereitung

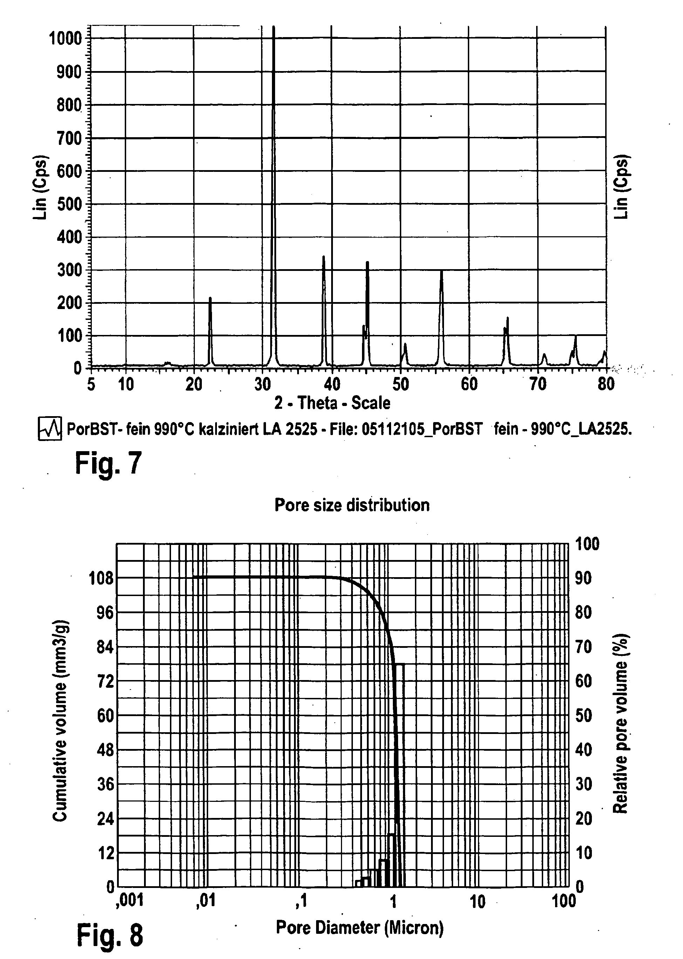

Nach keramischer Mischoxidtechnologie wurden im Labormaßstab zwei Pulverchargen aus modifizierten Bariumtitanat mit einer molaren Zusammensetzung von 95 Mol-% Bariumtitanat und 5 Mol-% Strontiumtitänat unter Verwendung oxidischer Rohstoffpulver aufbereitet. Nach thermischer Behandlung der Rohstoffpulvergemische (Kalzination) wird phasenreine tetragonale Perowskitstruktur erhalten (siehe Röntgenbeugungsdiagramm gemäß Fig. 7). Die Röntgenreflexe liegen zwischen den der in der ASTM-Kartei registrierten Verbindungen Bariumtitanat und 40%igem Barium-Strontiumtitanat. Nach Mahlen in der Trommelmühle steht für die Extrusion ein Pulver mit einer Feinheit von 90 Masse-% kleiner 10 µm zur Verfügung.

### 2. Formgebung und Sintern

Aus dem Pulver wurde durch Zusatz geeigneter Bindemittel, Gleitmittel und Wasserretentionsmittel in einem Brabender-Laborkneter eine steifplastische extrudierfähige Masse aufbereitet. Es zeigte sich, dass für die spezielle Pulverzusammensetzung eine Anpassung der Plastifizierungsrezeptur erforderlich ist. In einem Brabender-Vakuum-Schneckenextruder wurden aus dieser steifplastischen Masse mit einem eigens dafür angefertigten Extrudierwerkzeug keramische Grünlinge in Streifenform mit einem Querschnitt von 1,3 x 28 mm hergestellt.

Gesintert wurden die Grünlinge nach vorsichtiger thermischer Zersetzung der organischen Hilfsmittel bei 1220 °C in oxidierender Atmosphäre. Die laterale Schwindung liegt bei etwa 3%.

### 3. Metallisierung

Die Metallisierung zum Aufbringen der Elektroden wurde im Siebdruckverfahren realisiert. Es wurde ein Drucksieb mit einer angepassten Gitterelektrodenstruktur erprobt. Auf einer Elektrodenfläche sind 209 Aussparungen von 1 x 1 mm im Abstand von 1 mm vorhanden. In Vorversuchen wurde durch Siebdruckpasten mit Silber, Gold, Aluminium, Kupfer und Molybdän als Hauptbestandteil getestet. Silber ist wegen der bei Gleichspannung im Elektrolyten auftretenden Migration ungeeignet. Kupfer kann nur reduzierend eingebrannt werden, haftet aber nach reduzierendem Einbrand auf der Bariumtitanatkeramik nicht. Somit sind insbesondere Gitterelektroden aus Gold, Aluminium und Molybdän für die Zwecke der vorliegenden Erfindung geeignet.

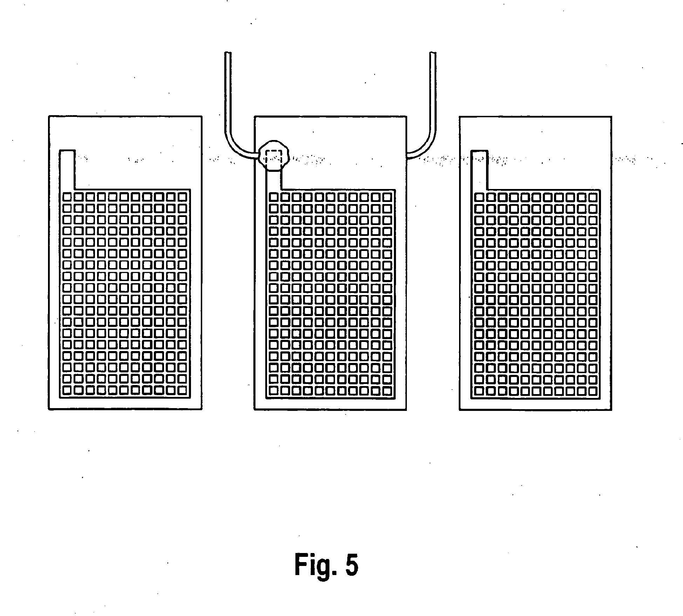

In Fig. 5 sind Muster der keramischen Schichten mit Gitterelektroden aus Gold, Aluminium bzw. Molybdän dargestellt. Bei Versuchen hat sich herausgestellt, dass für die Zwecke der vorliegenden Erfindung alle drei Metalle geeignet sind, jedoch eignet sich Gold am besten.

### 4. Charakterisierung des keramischen Materials

Zur vorläufigen Charakterisierung des Keramikmaterials wurden die offene Porosität und das dielektrische Verhalten untersucht.

Die offene Porosität liegt mit ca. 38% in der angestrebten Größenordnung. Die Porengrößenverteilung (vgl. Fig. 8) liegt nach den Ergebnissen der Quecksilberporosimetrie zu 95% in einem engen Bereich zwischen 700 nm und 1500 nm.

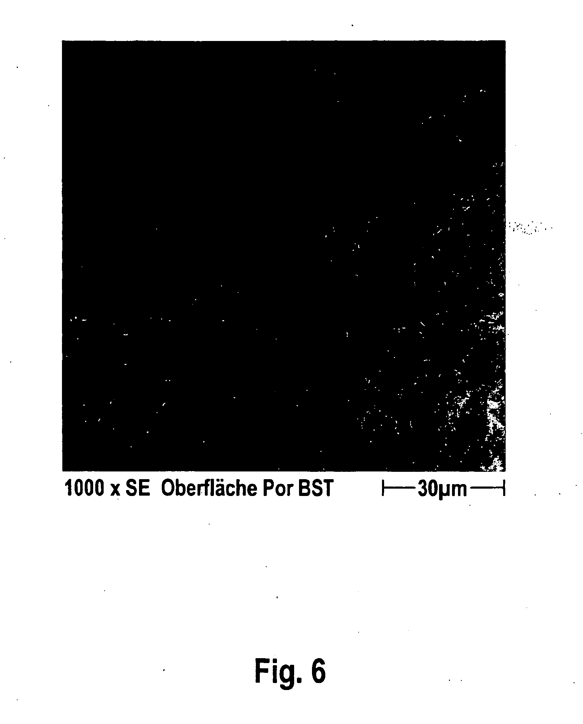

Die rasterelektronenmikroskopische Aufnahme der Oberfläche der gesinterten Keramik (vgl. Fig. 6) zeigt, dass die Sinterung, wie beabsichtigt, nicht über das Frühstadium, die Ausbildung sogenannter Sinterhälse in den Körnern hinausgeht. Auch das für Bariumtitanat sonst typische starke Kornwachstum tritt nicht auf.

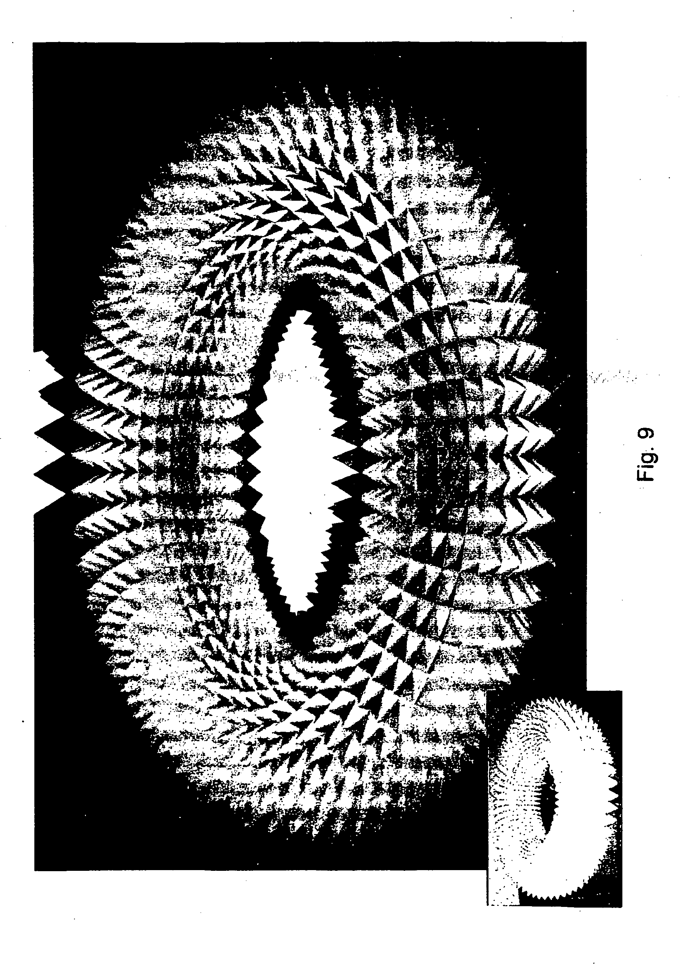

Erste Messungen der Probenkapazität liefern Werte von C = 3,5 nF und tand = 0,01, was einer relativen Dielektrizitätskonstante von etwa 730 entspricht. Messungen mit Hochspannung beschränken sich aus gerätetechnischen Gründen zunächst auf 1500 V, wobei noch keine Sättigung der dielektrischen Hysterese auftritt. Besonders große Oberflächen ergeben sich, wenn die Bariumtitanatkeramik toroidförmig, wie in Fig. 9 gezeigt, ausgebildet ist.

Die vorliegenden Erfindung kann zur wirtschaftlichen Erzeugung von Wasserstoff und Sauerstoff unter Verwendung von porösen ferroelektrischen Keramiksystemen in Anordnungen, welche als Wasserspaltungsreaktor eingesetzt werden können, verwendet werden.

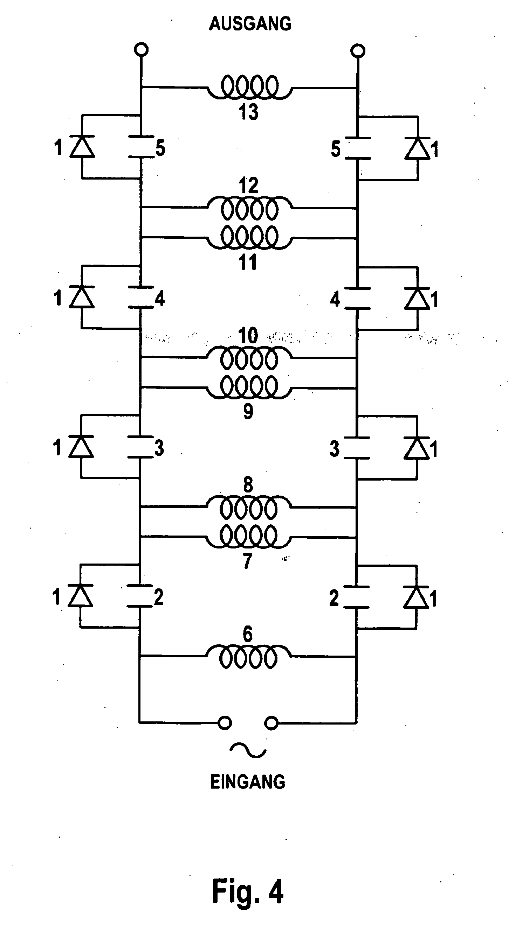

Die im Ausführungsbeispiel hergestellten und in den Figuren 5 und 6 gezeigten porösen ferroelektrischen Schichten, im Beispielsfalle Keramikschichten, werden in eine 1 %ige NaOH-Lösung eingetaucht und mit Hilfe einer Filterschaltung gemäß Fig. 4 mit einer Wechselspannungs quelle versehen.

Die im Folgenden beispielhaft beschriebene elektronische Filterschaltung, welche im Folgenden ZIM-ZUM-Schaltung genannt wird, ist für den Betrieb mit Wechselspannung geeignet.

Eine elektronische ZIM-ZUM-Schaltung ist gekennzeichnet durch die Kombination folgender Konstruktionsmerkmale und Eigenschaften:

Kondensatoren 2, 3, 4, 5 sind in Reihe geschaltet. Dioden 1 sind zu den Kondensatoren parallel geschaltet, wie in Fig. 4 gezeigt. Darüber hinaus weist die erfindungsgemäße Schaltung Induktivitäten als offene Feldspulen auf, welche in Fig. 4 mit 6, 7, 8, 9, 10, 11, 12 und 13 bezeichnet sind und welche, wie in Fig. 4 gezeigt, parallel geschaltet sind.

Die gesamte Schaltung wird mit Wechselspannung auf der Eingangsseite beaufschlagt, wobei am Ausgang der Schaltung gemäß Fig. 4 eine hochfrequente Wechselspannung mit einer Frequenz vom Mega- bis Gigahertzbereich anliegt.

Die Bauelemente der Schaltung gemäß Fig. 5 bilden eine Verstärkerstufe oder eine mehrstufige Kaskade mit Verstärkerwirkung. Die Kaskade arbeitet mit einem Wirkungsgrad von mehr als 90%.

Die ZIM-ZUM-Schaltung ist eine Kaskadenschaltung und weist mehrere Resonanzfrequenzen auf. Sie weist eine so genannte Rückflussdämpfung auf. Strom und Spannung verlaufen bei dieser Schaltung nahezu phasengleich. Dadurch hat die ZIM-ZUM-Schaltung einen Wirkungsgrad von mehr als 90%, weil kaum Blindleistung anfällt. Als mechanische Analogie kommt eine zweischenklige Wasserpumpe mit alternierendem Wässerausstoß in Betracht. Die Dioden haben in analoger Weise die Funktion, wie Pumpenventile gegen einen Wasserrückfluss wirken. Die Anordnung der Spulen gemäß Fig. 4 erzeugt inhomogene magnetische Wechselfelder. Die größten magnetischen Feldstärken in den Feldspulen treten in Konzept und Realität am Schaltungsaufgang auf.

Eine erklärende mechanische Analogie ist daher eine zweischenklige Wasserpumpe mit Betrieb der Schenkel im Wechseltakt. Die Pumpe besteht aus einzelnen Modulen. Die Überspannung, also das Druckgefälle, das an den Kondensatoren anliegt, steigt zum Ausgang hin stark an. Zur Änderung der Durchflussmenge: Zunächst wird in den beiden mittleren Modulen der Rohrquerschnitt verkleinert. Von den mittleren Modulen zum Ausgang hin wird der Rohrquerschnitt stark vergrößert und die Sogwirkung auf diese Weise noch verstärkt. Insbesondere wirkt die ZIM-ZUM-Schaltung auch als mehrstufiger Verstärker. Sie weist durch die den Kondensatoren parallel geschalteten Dioden eine so genannte Rückflussdämpfung auf. Die in Fig. 4 gezeigte Schaltung ist in allen Systemen einsetzbar, bei denen es besonders auf eine phasengleiche Einspeisung von Strom und Spannung ankommt.

Eine beispielhafte Auswirkung der Schaltung gemäß Fig. 4 ist im Folgenden wiedergegeben:
1 bezeichnet Dioden vom Typ 1 N4007
2 bezeichnet Kondensatoren einer Kapazität von 100 nF
3 bezeichnet Kondensatoren mit einer Kapazität von 47 nF
4 bezeichnet Kondensatoren mit einer Kapazität von 33 nF
5 bezeichnet Kondensatoren mit einer Kapazität von 10 nF
6 bezeichnet eine Induktivität mit 3,3 mH
7 bezeichnet eine Induktivität mit 3,3 mH
8 bezeichnet eine Induktivität mit 2,2 mH
9 bezeichnet eine Induktivität mit 2,2 mH
10 bezeichnet eine Induktivität mit 1 mH
11 bezeichnet eine Induktivität mit 1 mH
12 bezeichnet eine Induktivität mit 4,7 mH
13 bezeichnet eine Induktivität mit 4,7 mH

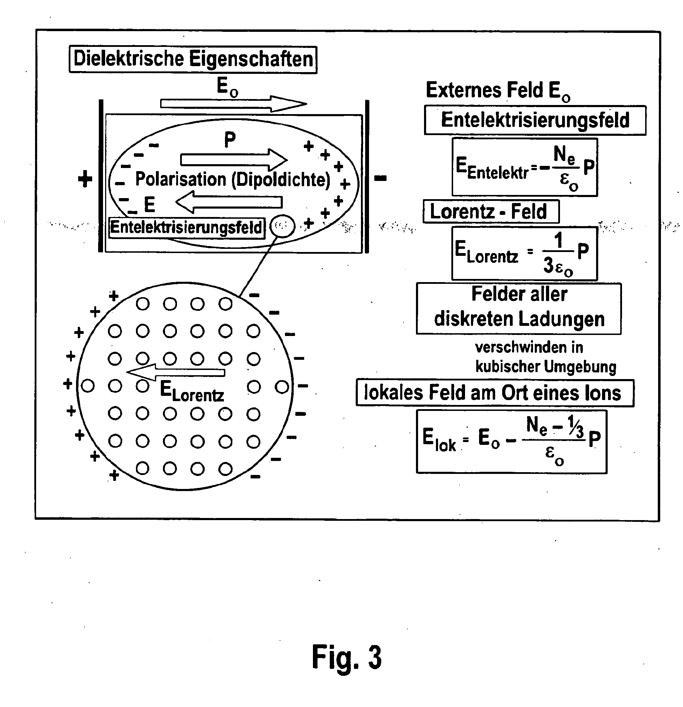

Bei dem erfindungsgemäßen Verfahren handelt es sich im Gegensatz zum Stand der Technik nicht um einen Elektrolysator, sondern um einen sogenannten Hyperpolarisator. Dies bedeutet, dass Wasser auf molekularer Ebene bzw. über kurzlebige Zwischenradikale und nicht über Protonen und Hydroxidionen und über Stromtransport entstehen, sondern die Spaltung des Wasserdipols erfolgt mittels der erfindungsgemäßen Anordnung aufgrund einer "Vorspannung" durch permanente elektrische Felder in den Nanoporen, also den so genannten LORENTZ-Feldern, wie sie beispielsweise in Fig. 3 gezeigt sind, zusammen mit dem eingetragenen elektromagnetischen Impuls. Demzufolge erfolgt die Spaltung der Wassermoleküle hauptsächlich durch Feld- und Resonanzeffekte und nicht wie im Stand der Technik durch den Stromfluss.

Es entstehen Gasfraktionen, die sich in der Keramikmembrane in gegensätzliche Richtungen bewegen.

Durch die parallele Ausrichtung der elektrischen Felder in den Poren erfolgt eine Behinderung der Wärmebewegung der Wassermoleküle sowie eine Verstärkung der OH-Streckschwingung durch Feld- und Resonanzeffekte.

Für die Zwecke der vorliegenden Erfindung hat es sich herausgestellt, dass es der beschriebenen porösen, insbesondere nanoporösen und ferroelektrischen Schicht oder Membran bedarf, um die Wasser-Cluster mehr oder weniger mechanisch auflösen zu können. Das Wasser geht durch die Auflösung der Cluster in den Poren schon bei ca. 30 °C in die Dampfphase über.

Die verwendete ferroelektrische Keramikplatte saugt sich etwa zu einem Drittel in eine nur 1% Natronlauge gestellt selber voll und ist somit benetzbar und erzeugt einen kapillaren Sog.

Darüber hinaus muss erfindungsgemäß eine Wechsetspannung anliegen, um die Feld- und Resonanzeffekte innerhalb der inneren Oberfläche der porösen ferroelektrischen Schicht zu verstärken und schlussendlich das Wasser zu spalten.

Die Trennung von H₂/O₂ erfolgt - sofern erforderlich - mit bekannten Verfahren wie fraktionierte Destillation, Membrantrennung oder Abfragen des H₂ als Metallhydrid.

Mit der vorliegenden Erfindung konnten im Labormaßstab in einem KOH Elektrolyten mit einem Volumen von ca. 200 ml zwischen 300 und 500 ml Wasserstoff pro Stunde erzeugt werden.

Der Energieaufwand zur Versorgung der Filterschaltung ist minimal, so dass sich mit der vorliegenden Erfindung erstmals ein wirtschaftliches Verfahren zum Herstellen von Wasserstoff aus Wasser in ausreichender Menge und ökologisch unbedenklich herstellen lässt.

Die ökologische Unbedenklichkeit kommt noch besser zum Tragen, wenn die Filterschaltung mit Wechselspannung aus Solarstrom beaufschlagt wird.

## Patentansprüche

1. Anordnung zum Spalten von Wasser mit
a. einer ersten Elektrode und wenigstens einer weiteren Elektrode;
b. wenigstens einer zwischen der ersten und der weiteren Elektrode angeordneten porösen ferroelektrischen Schicht; sowie einer
c. Wechselspannungsquelle.

2. Anordnung nach Anspruch 1, **dadurch gekennzeichnet, dass** die Elektroden als Gitterelektroden ausgebildet sind.

3. Anordnung nach Anspruch 1 oder 2, **dadurch gekennzeichnet, dass** die Elektroden aus Edelstahl, insbesondere V2A oder V4A, Edelmetallen, Palladium; deren Legierungen; elektrisch leitender Keramik; oder elektrisch leitenden Polymeren, gebildet sind.

4. Anordnung nach einem der Ansprüche 1 bis 3, **dadurch gekennzeichnet, dass** die poröse ferroelektrische Schicht aus wenigstens einem Material gebildet ist, welches ausgewählt wird aus der Gruppe bestehend aus: organischen Ferroelektrika, insbesondere Elektrete, wie halogenierte Kohlenwasserstoffe, insbesondere Tetrafluorethylen; Cyclohexan-1,1'-diacetessigsäure, Triglycinsulfat und anorganischen Ferroelektrika, insbesondere keramische Ferroelektrika, bevorzugt Ionenkristalle mit Perowskitstruktur, vorzugsweise Bariumtitanat, Strontiumtitanat, Blei-Zirkonat-Titanat, Stroritium-Bismut-Tantalat, Bismuttitanat, Bismut-Lanthan-Titanat, Bismut-Titanat-Niobat; sowie deren Mischungen.

5. Anordung nach Anspruch 4, **dadurch gekennzeichnet, dass** die keramischen Ferroelektrika zusätzlich nicht ferroelektrische Zusatzstoffe, insbesondere oberflächenaktivierende und/oder oberflächenvergrößernde Stoffe, vorzugsweise katalytische Stoffe wie Metalloxide, insbesondere Aluminiumoxide, oder und/oder Zeolithe enthalten.

6. Anordnung nach einem der Ansprüche 1 bis 4, **dadurch gekennzeichnet, dass** die Wechselspannungsquelle ein Frequenzgenerator ist.

7. Anordnung nach Anspruch 5, **dadurch gekennzeichnet, dass** die Wechselspannung eine Frequenz vom Mega- bis Gigahertzbereich aufweist.

8. Anordnung nach einem der Ansprüche 5 oder 6, **dadurch gekennzeichnet, dass** zwischen Frequenzgenerator und Anordnung eine Filterschaltung vorgesehen ist.

9. Anordnung nach Anspruch 8, **dadurch gekennzeichnet, dass** die Filterschaltung wie folgt aufgebaut ist:

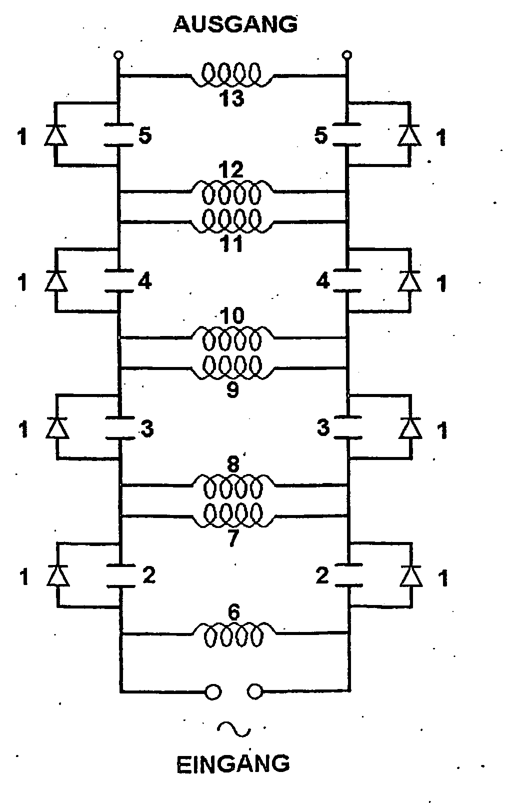

10. Anordnung nach einem der Ansprüche 1 bis 8, **dadurch gekennzeichnet, dass** die poröse ferroelektrische Schicht oktaederförmig ausgebildet ist.

11. Anordnung nach einem der Ansprüche 1 bis 8, **dadurch gekennzeichnet, dass** die poröse ferroelektrische Schicht als Zylinder, Kegelstumpf oder komplexes Toroid ausgebildet ist.

12. Verfahren zum Spalten von Wasser, wobei man
a. Wasser mit einer Anordnung gemäß wenigstens einem der Ansprüche 1 bis 11 in Kontakt bringt;
b. an die Elektroden der Anordnung gemäß den Ansprüchen 1 bis 11 eine Wechselspannung anlegt, wobei Wasser in der Anordnung im wesentlichen in Wasserstoffgas und Sauerstoffgas gespalten wird; und
c. man das entstehende Gas entfernt.

13. Verfahren nach Anspruch 12, **dadurch gekennzeichnet, dass** man das entstehende Gas als Brenngas in einem Heizkraftwerk oder einem Verbrennungsmotor einsetzt oder als technisches Gasgemisch, bevorzugt zum Schweißen, einsetzt oder die Gase in Sauerstoff und Wasserstoff auftrennt und getrennt verwendet.

## Claims

1. System for splitting water comprising
a. a first electrode and at least one additional electrode;
b. at least one porous ferroelectric layer arranged between the first and the additional electrode; and
c. a source of AC voltage.

2. System according to claim 1, **characterized in that** the electrodes are formed as grid electrodes.

3. System according to claim 1 or 2, **characterized in that** the electrodes are formed of stainless steel, in particular V2A or V4A, precious metals, palladium; alloys thereof; electrically conductive ceramic; or electrically conductive polymers.

4. System according to one of claims 1 to 3, **characterized in that** the porous ferroelectric layer is formed of at least one material selected among the group consisting of: organic ferroelectrics, in particular, electrets such as halogenated hydrocarbons, in particular tetrafluoroethylene; cyclohexane-1,1'-diacetic acid, triglycine sulfate and inorganic ferroelectrics, in particular ceramic ferroelectrics, preferably ion crystals having a perovskite structure, preferably barium titanate, strontium titanate, lead zirconate titanate, strontium bismuth tantalate, bismuth titanate, bismuth lanthane titanate, bismuth titanate niobate; as well as mixtures thereof.

5. System according to claim 4, **characterized in that** the ceramic ferroelectrics additionally contain non-ferroelectric additives, in particular surface activating and/or surface enlarging substances, preferably catalytic substances such as metal oxides, in particular aluminum oxides, or and/or zeolites.

6. System according to one of claims 1 to 4, **characterized in that** the AC voltage source is a frequency generator.

7. System according to claim 5, **characterized in that** the AC voltage exhibits a frequency in the mega -to gigahertz range.

8. System according to one of claims 5 or 6, **characterized in that** a filter circuit is provided between frequency generator and system.

9. System according to claim 8, **characterized in that** the filter circuit has the following design:

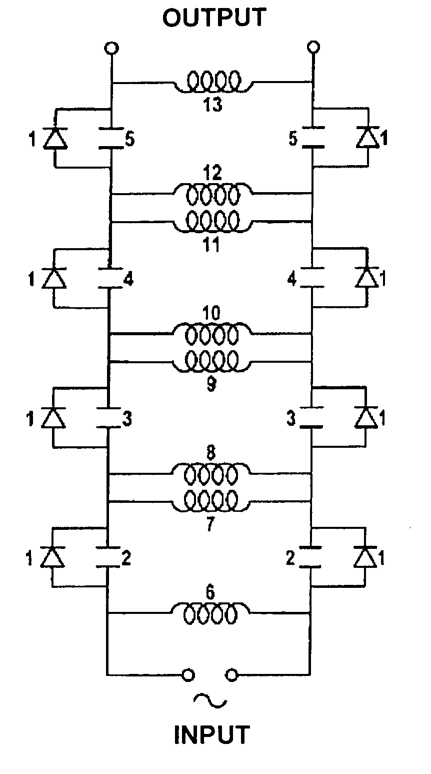

10. System according to one of claims 1 to 8, **characterized in that** the porous ferroelectric layer is formed in the shape of an octahedron.

11. System according to one of claims 1 to 8, **characterized in that** the porous ferroelectric layer is formed in the shape of a cylinder, truncated cone, or complex toroid.

12. Method for splitting water, wherein
a. water is contacted with a system according to at least one of claims 1 to 11;
b. an AC voltage is applied to the electrodes of the system according to claims 1 to 11, wherein water is split in the system essentially into hydrogen gas and oxygen gas; and
c. the created gas is removed.

13. Method according to claim 12, **characterized in that** the created gas is used as fuel gas in a combined heat and power plant or in a combustion engine or as a technical gas mixture, preferably for welding, or the gases are separated into oxygen and hydrogen and used separately.

## Revendications

1. Système de décomposition d'eau, comprenant
a) une première électrode et au moins une autre électrode ;
b) au moins une couche ferroélectrique poreuse disposée entre la première et l'autre électrode ; ainsi que
c) une source de tension alternative.

2. Système selon la revendication 1, **caractérisé en ce que** les électrodes sont réalisées sous la forme d'électrodes à grille.

3. Système selon la revendication 1 ou la revendication 2, **caractérisé en ce que** les électrode sont fabriquées en acier inoxydable, en particulier les nuances V2A ou V4A, en métaux nobles, en palladium ; en alliages de ces métaux ; en céramique électriquement conductrice ; ou en polymères électriquement conducteurs.

4. Système selon l'une des revendications 1 à 3, **caractérisé en ce que** la couche ferroélectrique poreuse se compose d'au moins un matériau choisi dans le groupe comprenant : des matériaux ferroélectriques organiques, en particulier des électrets tels que des hydrocarbures halogénés, en particulier le tétrafluoroéthylène, le cyclohexane-1,1'-diacétate, le sulfate de triglycine, et des matériaux ferroélectriques inorganiques, en particulier des matériaux ferroélectriques céramiques, de préférence des cristaux ioniques à structure de pérovskite, préférentiellement le titanate de baryum, le titanate de strontium, le zirconate-titanate de plomb, le tantalate de strontium-bismuth, le titanate de bismuth, le titanate de bismuth-lanthane, le titanate-niobate de bismuth ; ainsi que des mélanges de ces matériaux.

5. Système selon la revendication 4, **caractérisé en ce que** les matériaux ferroélectriques céramiques contiennent en plus des additifs non ferroélectriques, en particulier des substances qui activent et/ou qui agrandissent les surfaces, de préférence des substances catalytiques telles que des oxydes métalliques, en particulier des oxydes d'aluminium et/ou des zéolithes.

6. Système selon l'une des revendications 1 à 4, **caractérisé en ce que** la source de tension alternative est un générateur de fréquence.

7. Système selon la revendication 5, **caractérisé en ce que** la tension alternative a une fréquence dans la plage du mégahertz au gigahertz.

8. Système selon l'une des revendications 5 ou 6, **caractérisé en ce qu'**un circuit de filtrage est prévu entre le générateur de fréquence et le système.

9. Système selon la revendication 8, **caractérisé en ce que** le circuit de filtrage a la structure suivante :

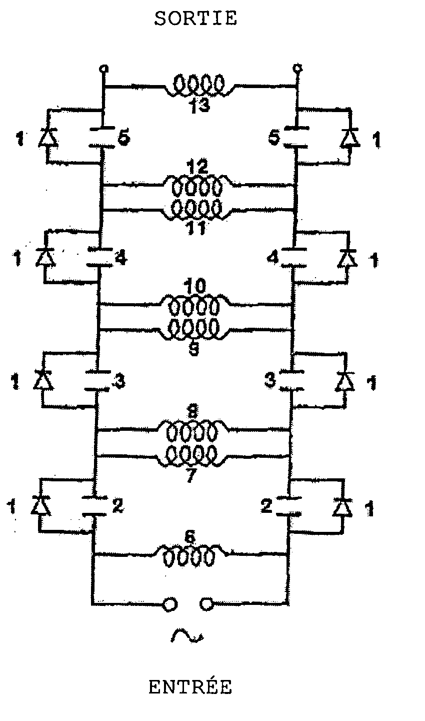

10. Système selon l'une des revendications 1 à 8, **caractérisé en ce que** la couche ferroélectrique poreuse est de forme octaédrique.

11. Système selon l'une des revendications 1 à 8, **caractérisé en ce que** la couche ferroélectrique poreuse à la forme d'un cylindre, d'un tronc de cône ou d'un toroïde complexe.

12. Procédé de décomposition d'eau, dans lequel
a) on met de l'eau en contact avec un système selon l'une au moins des revendications 1 à 11 ;
b) on applique une tension alternative aux électrodes du système selon les revendications 1 à 11 afin de décomposer l'eau présente dans le système essentiellement en hydrogène gaz et en oxygène gaz ; et
c) on évacue le gaz formé.

13. Procédé selon la revendication 12, **caractérisé en ce que** le gaz formé est utilisé en tant que combustible gazeux dans une centrale thermique ou un moteur à combustion ou en tant que mélange gazeux technique, de préférence pour le soudage, ou bien **en ce que** les gaz sont séparés en oxygène et en hydrogène et utilisés séparément.
